Europäisches Patentamt

(19) **European Patent Office**

**Office européen des brevets**

(11) Publication number: **0 067 005**
A1

(12) EUROPEAN PATENT APPLICATION

(21) Application number: **82302673.7**

(22) Date of filing: **25.05.82**

(51) Int. Cl.³: **B 01 D 53/26,** F 17 C 7/04,
F 23 J 15/00

(30) Priority: **29.05.81 GB 8116510**

(43) Date of publication of application: **15.12.82**
Bulletin 82/50

(84) Designated Contracting States: **BE DE FR IT NL SE**

(71) Applicant: **JOHN THURLEY LIMITED, Ripon Road
Harrogate, North Yorkshire HG1 2BU (GB)**

(72) Inventor: **Thurley, John, 34 Cavendish Avenue, Harrogate
North Yorkshire (GB)**

(74) Representative: **Harrison, Michael Robert et al,
Urquhart-Dykes & Lord Tower House Merrion Way,
Leeds, LS2 8PB (GB)**

(54) **Fog prevention.**

(57) A method and apparatus for reducing the formation of fog by exhaust gases entering the atmosphere from apparatus which includes an immersed combustion heater. The method comprises cooling the exhaust gases prior to their entry into the atmosphere so as to remove water vapour, the cooling being, for instance, by spraying water in a direction against the gas flow in an exhaust stack.

0067005

- 1 -

FOG PREVENTION

The present invention relates to the prevention of fog formation caused by exhaust gases from apparatus such as submerged or immersed combustion vaporisers or heaters.

Submerged or immersed combustion vaporisers or heater apparatus are particularly useful for the vaporisation or heating of, for instance, cryogenic fluids such as liquid natural gas (L.N.G.). In such apparatus the process fluid, such as L.N.G., is passed through heat exchanger pipes immersed in a water bath. Hot combustion products are then passed through the water bath to heat the water and the process fluid to the desired temperature, the combustion products then being discharged to the atmosphere by an exhaust stack.

However, the exhaust gases are frequently saturated with water vapour from the water bath and indeed, entrained moisture may be also carried by the exhaust gases from the water bath. When the exhaust gases come into contact with cooler air on discharge from the exhaust stack, then the moisture in the warm combustion products may condense or form water droplets. This may then cause the formation of clouds of water vapour or small water droplets which, in addition to reducing visibility, dampen the equipment and operating personnel.

It is possible to reduce the formation of water vapour fog at the exhaust stack of such apparatus by super-heating the combustion products in the stack to above the saturation temperature, so that the exhaust gases do not immediately cool on leaving the stack and so do not form a fog cloud. However, super-heating substantially increases the operating costs of the system whether the stack gases are re-heated by combustion products or by indirect heat exchange with the hot water from the water bath. The energy requirements are often further increased by the presence of entrained moisture from the water bath, which requires latent heat of vaporisation as well as super-heating. In cold climates, super-heating does not prevent condensation of water vapour at the exhaust stack, but merely increases the height at which the fog cloud is formed.

An alternative method of reducing fog formation is to lower the temperature of the water bath which reduces the stack temperature and also reduces the amount of water vapour discharged. This method has the disadvantage that if relatively high temperatures are required for the process fluid then it is impractical to reduce the water bath temperature below a certain level. In addition, low water bath operation temperatures increase the size of the heat exchanger required, because of the decrease in the temperature difference between the water bath and the initial temperature of the process fluid.

According to the present invention there is provided a method of reducing the formation of fog by exhaust gases entering the atmosphere from apparatus which includes an immersed combustion heater, the method comprising cooling said exhaust gases prior to the entry of the gases into the atmosphere, so as to remove water vapour carried by said gases.

Preferably said apparatus is for the heating or vaporisation of cryogenic fluids. More preferably said fluids are liquid gases such as liquid natural gas or liquid nitrogen.

Preferably said cooling of said exhaust gases is by means of contacting said exhaust gases with a fluid of a lower temperature. More preferably said fluid is water. Preferably said contacting is by counter-current flow of said exhaust gases and said fluid. More preferably said exhaust gases flow substantially upwardly along an exhaust stack whilst said cooling fluid flows downwardly along said stack. Most preferably said fluid is in the form of a spray.

Preferably said exhaust gases are discharged from the exhaust stack through a mist eliminator to prevent the carrying into the atmosphere of entrained moisture.

In other embodiments cooling may be effected by means of heat pumps    bubble trays    or suitably packed columns.

The present invention also provides apparatus including an immersed combustion heater, said apparatus including means for cooling the exhaust gases before discharge to the atmosphere so as to remove water vapour carried by said exhaust gases.

A fog prevention method according to the present invention has several advantages over known systems. It is substantially cheaper/than super-heating as in operating cost well as being more effective. It allows the operation of the water bath used in such equipment to be of a temperature as high as may be desired without the problems of fog formation and serious lowering of efficiency. In addition, reduction of the stack temperature to approximately $5^{\circ}C$, for instance, increases the net thermal efficiency of a vaporiser according to the present invention to approximately 110%. As an example, the energy saving on a large liquid natural gas vaporiser installation could amount to between five hundred thousand and a million pounds per year.

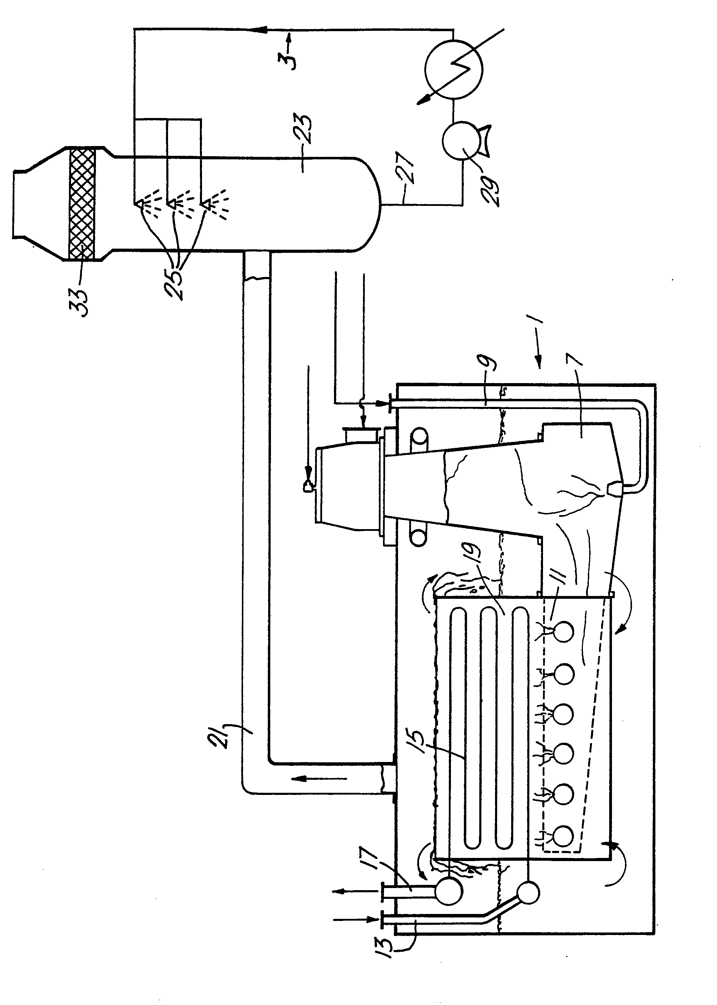

An embodiment of the present invention will now be described by way of example only and with reference to the accompanying drawing which is a schematic diagram of a submerged combustion vaporiser in accordance with the present invention.

Referring to the drawing, a submerged combustion vaporiser for the heating of cryogenic fluids such as L.N.G., comprises a first primary heat exchange portion 1 and a secondary heat exchange portion 3.

The primary heat exchange portion 1 comprises a substantially conventional submerged combustion vaporiser apparatus. A combustion chamber 7 is fed by fuel via feed pipe 9, and the hot combustion products are vented from the combustion chamber through outlets 11. The combustion products then rise through a water bath 19, heating the water, and are then allowed to leave the vaporiser 5 by means of an exhaust pipe-line 21. A process fluid such as L.N.G., is fed through inlet pipes 13 into a tube heat exchanger 15 immersed in the water bath 19. The process fluid then, having been heated by the water bath, leaves the heat exchanger by outlet pipe 17.

The exhaust gases, having heated the water bath, pass along the exhaust pipe 21 to an exhaust stack 23.

The warm exhaust gases then rise up the stack. The stack 23 is equipped with water sprays 25 at levels above the height of the inlet of the exhaust pipe 21 into the stack 23. Water from the sprays 25 is directed downwardly counter-current to the flow of the exhaust gases up the stack 23. The temperature of the water flowing from the sprays 25 is considerably cooler than the temperature of the exhaust gases, and may be for instance between $2^{o}$ and $5^{o}C$.

The contact with the cool water spray reduces the temperature of the exhaust gases during their passage up the stack 23. Sufficient numbers of sprays are situated at intervals along the height of the stack 23 so as to reduce the temperature of the exhaust gases. Water vapour carried by the gases is caused to condense and fall down the stack with the original water spray.

Having lost substantially all of the water vapour the exhaust gases then pass through a substantially conventional mist separator, comprising a fine grid, which removes any entrained moisture carried by the exhaust gases, which are then vented to the atmosphere at a temperature of between 5 and $10^{o}C$ approximately. Typically between approximately 90 and 95% of the water carried by the exhaust gases may be removed in the stack 23, and accordingly there is little or no fog formation on the discharge of the exhaust gases to the atmosphere.

The condensed water vapour, together with the entrained water droplets that has been removed from the exhaust gases, and the water sprays, fall to the bottom of the stack 23. The water falling to the bottom of the stack 23 has a temperature above that of the original water leaving the sprays 25, because of the contact, during the passage down the stack, with the warm exhaust gases. The water is removed from the bottom of the stack 23 by means of a pipe-line 27 and pump 29 and taken to a secondary heat exchanger. The heat removed from the water may be used to raise the temperature of the process fluid, or for other purposes. The cooled water, having been brought down to a temperature of between approximately $2^{\circ}C$ and $5^{\circ}C$ is then pumped up to the sprays in the upper portion of the stack 23 to re-commence the cycle of the water flow.

The above described apparatus may have a net thermal efficiency of between 108 and 110% and is considerably cheaper in operating cost/than known fog prevention systems.

CLAIMS:

1. A method of reducing the formation of fog by exhaust gases entering the atmosphere from apparatus which includes an immersed combustion heater, characterised in that the method comprises cooling said exhaust gases prior to the entry of the gases into the atmosphere, so as to remove water vapour carried by said gases.

2. A method according to claim 1 characterised in that the apparatus is for the heating or vapourisation of cryogenic fluids.

3. A method according to claim 1 or claim 2 characterised in that said cooling of said exhaust gases is by contacting said exhaust gases with a fluid of a lower temperature.

4. A method according to claim 3 characterised in that said fluid is water.

5. A method according to claim 3 or claim 4 characterised in that said fluid is in the form of a spray.

6. A method according to any of claims 3 to 5 characterised in that said exhaust gases flow substantially upwardly along an exhaust stack while said cooling fluid flows downwardly along said stack.

7. A method according to any of claims 3 to 6 characterised in that said fluid, after contacting the exhaust gases in the stack, is fed from the stack, cooled and then returned to the stack to effect further cooling of exhaust gases.

8. A method according to any of claims 3 to 7 characterised in that said exhaust gases are discharged from the exhaust stack through a moist eliminator to prevent the carrying into the atmosphere of entrained moisture.

9. Apparatus for the heating or vapourisation of cryogenic fluids characterised in that it comprises an immersed combustion heater and means for cooling the exhaust gases before discharge to the atmosphere so as to remove water vapour carried by said exhaust gases.

10. Apparatus according to claim 9 characterised in that the apparatus includes an exhaust stack up which the exhaust gases are caused to flow and said cooling means comprise means for spraying water within said stack against the flow of the exhaust gases.

0067005
Application number

European Patent
Office

**EUROPEAN SEARCH REPORT**

EP 82 30 2673.7

| Category | Citation of document with indication, where appropriate, of relevant passages | Relevant to claim |
|---|---|---|
| A | Patent Abstracts of Japan<br>Vol. 5, No. 20, 6 February 1981<br>& JP - A - 55 - 147186<br>— | 1-10 |
| A | FR - A - 2 430 585 (GAZ DE FRANCE)<br>* claim 1; page 9, line 33 to page 10, line 24; fig. 1, 4 *<br>— | 1-8 |
| A | DE - A - 2 061 435 (R. VON LINDE)<br>———— | |

**DOCUMENTS CONSIDERED TO BE RELEVANT**

**CLASSIFICATION OF THE APPLICATION (Int. Cl. ³)**

B 01 D 53/26
F 17 C 7/04
F 23 J 15/00

**TECHNICAL FIELDS SEARCHED (Int.Cl. ³)**

B 01 D 53/00
F 17 C 7/00
F 17 C 9/00
F 23 J 15/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

[X] The present search report has been drawn up for all claims

| Place of search | Date of completion of the search | Examiner |
|---|---|---|
| Berlin | 05-08-1982 | BERTRAM |

EPO Form 1503.1 06.78